# DEMANDE DE BREVET EUROPEEN

(11) **EP 1 070 902 A2**
(43) Date de publication de la demande: **24.01.2001**
(21) Numéro de dépôt: 00402084.8
(22) Date de dépôt: 21.07.2000
(51) Int. Cl.: F16L 47/00, F16L 41/08

(54) **Raccord de branchement de canalisation et procédé pour sa fabrication**

(30) Priorité: 22.07.1999 IT BO990095 U
(71) Demandeur: ETEX, F-75008 Paris (FR)
(72) Inventeur: Moreno, Cioni, 40033 Casalecchio (Bologna) (IT)
(74) Mandataire: Dawidowicz, Armand

(57) **Abrégé**

L'invention concerne un raccord (1) de branchement de canalisation comprenant un fût tubulaire (2) en matière synthétique muni à ses deux extrémités d'emboîtures (M, F) de liaison, ledit fût tubulaire (2) étant muni d'au moins une saillie (3) externe à paroi (3') plane percée d'un orifice (4), un manchon de branchement (7) étant fixé au fût tubulaire (2) en regard dudit orifice.

Selon l'invention, ledit manchon de branchement (7) comporte une collerette plane (8) d'extrémité qui est fixée dans l'alignement de l'orifice (4), sur la face externe de ladite paroi plane (3'), et le manchon de branchement (7) est ajusté et fixé sur un manchon de fixation (5) traversant dont l'extrémité interne est munie d'une collerette plane (6) fixée sur ladite paroi plane (3').

## Description

La présente invention concerne un raccord de branchement de canalisation du type comprenant un fût tubulaire en matière synthétique thermoplastique muni à ses deux extrémités d'emboîtures de liaison respective aux tuyaux de la canalisation principale, ainsi qu'au moins un tube de branchement débouchant dans ledit fût tubulaire.

De tels raccords de branchement sont bien connus dans le domaine de la construction, par exemple pour le branchement de tubes d'évacuation d'eaux usées dans une canalisation principale commune.

La fabrication et la structure des raccords de branchement connus sont complexes et coûteuses.

Un premier raccord de branchement connu est constitué d'une pièce monobloc fabriquée par injection d'une matière thermoplastique appropriée. Un tel raccord est satisfaisant sur le plan de la résistance mécanique et pour ce qui concerne la facilité de pose. Cependant, sa fabrication est extrêmement coûteuse du fait du prix de revient élevé et du nombre très important des moules d'injection nécessaires pour couvrir une gamme complète de raccords, compte tenu de la diversité des diamètres, longueurs et emboîtures des fûts et des divers diamètres, longueurs et inclinaisons des tubes de branchement.

Un procédé courant (voir par exemple JP-A-8 118 472 et JP-A-8 174 647) consiste à former une collerette dans la paroi du fût cylindrique par déformation depuis l'intérieur et découpage de la face supérieure de la saillie ainsi formée. Un tube de branchement est ensuite soudé par miroir chauffant bout à bout sur l'extrémité de la collerette ou collé dans la collerette comme dans US-A-3 064 707. Ce raccord de branchement est de fabrication délicate et ne permet pas d'obtenir une grande variété d'angles d'inclinaison du tube de raccordement.

On a également proposé (voir par exemple US-A-3 490 791) de relier un tube de branchement à un fût cylindrique, muni d'une ouverture latérale appropriée, par l'intermédiaire d'un conduit tubulaire élastique muni d'une double collerette d'extrémité destinée à enserrer la paroi du fût cylindrique autour de l'orifice. Ce type de branchement, certes approprié pour une mise en oeuvre sur chantier, est inadapté pour la réalisation en usine d'un raccord de branchement offrant une bonne résistance mécanique.

On connaît en outre, par exemple par JP-A-4 163 029, un raccord de branchement dans lequel une extrémité du tube de branchement est introduite dans un orifice du fût puis est appliquée à chaud, par un corps de pression à l'intérieur du fût, contre les bords de l'orifice préalablement muni d'un élément d'étanchéité.

Il est également connu, en variante, par JP-A-4 163 129, de former dans la paroi du fût cylindrique, par extrusion-soufflage, une paroi plane en saillie extérieure qui est ensuite perforée avant fixation du tube de branchement comme dans le procédé précédent.

Ces procédés de fabrication restent compliqués et coûteux et sont difficiles à appliquer, en l'état pour des tubes de branchement obliques.

On a aussi proposé (voir par exemple WO-98/13641), une introduction du tube de branchement par vissage avec compression d'un joint d'étanchéité. Ce procédé est complexe car il nécessite des pièces de grande précision et une opération de vissage/serrage qui doit être soigneusement contrôlée.

On connaît enfin, par exemple par WO 87/07353, un raccord de branchement dans lequel le fût cylindrique est muni d'une ouverture ovale. Le tube de branchement, équipé d'une collerette d'extrémité, est introduit depuis l'extérieur dans l'ouverture ainsi formée en faisant passer cette collerette à travers l'ouverture et en collant la collerette sur la paroi interne du fût. Ensuite, un manchon de fixation, également muni d'une collerette, est glissé sur le tube de branchement et la collerette du manchon est collée sur la paroi externe du fût cylindrique. Ce mode de fabrication et de montage est encore peu satisfaisant du fait en particulier de la nécessité de faire passer la collerette du tube de branchement à travers l'orifice du fût et de la coller intérieurement sur la surface cylindrique du fût. Les deux collerettes doivent donc épouser parfaitement la surface intérieure ou extérieure du fût si l'on veut obtenir des bonnes résistances mécanique et étanchéité. Cette exigence est dans la pratique difficile à réaliser de manière reproductible.

Par ailleurs, lors du collage du manchon de fixation sur le tube de branchement, la colle est raclée lors du glissement des pièces entre elles, ce qui amoindrit les qualités du collage.

La présente invention vise à pallier les inconvénients des raccords de branchement connus et de leurs procédés de fabrication, en proposant un nouveau raccord de branchement plus économique, très résistant aux sollicitations mécaniques, et adaptable à des inclinaisons variées du tube de branchement.

A cet effet, un premier aspect de l'invention a pour objet un raccord de branchement de canalisation, du type comprenant un fût tubulaire en matière synthétique thermoplastique muni à ses deux extrémités d'emboîtures de liaison respective aux tuyaux de la canalisation principale, ledit fût tubulaire étant muni latéralement d'au moins une saillie externe à paroi plane percée d'un orifice traversant, un manchon de branchement étant fixé audit fût tubulaire en regard dudit orifice traversant, caractérisé en ce que ledit manchon de branchement comporte une collerette plane d'extrémité, ladite collerette plane d'extrémité du manchon de branchement étant collée ou soudée dans l'alignement de l'orifice traversant, sur la face externe de la paroi plane de ladite saillie externe, et en ce que ledit manchon de branchement est ajusté et collé ou soudé sur un manchon tubulaire de fixation traversant dont l'extrémité interne est munie d'une collerette plane collée ou soudée sur la face interne de la paroi plane de ladite saillie externe du fût tubulaire.

Le raccord de branchement selon la présente invention est de structure et de fabrication économiques, en particulier grâce à la possibilité d'utiliser un fût obtenu à partir d'un simple tronçon de tube en matière thermoplastique extrudée rigide, thermoformé, tulipé et/ou chanfreiné, ainsi qu'au montage préalable du manchon de fixation par l'intérieur du fût tubulaire. Son adaptation à des inclinaisons variées du tube de branchement est réalisée par le biseautage de l'orifice traversant du fût. La résistance mécanique et l'étanchéité sont rendues optimales par la superposition avec collage ou soudage du manchon tubulaire de fixation et d'une portion du manchon de branchement, ainsi que par le collage ou le soudage des collerettes des deux manchons de part et d'autre de la paroi plane de ladite saillie externe du fût tubulaire.

L'invention a également pour objet un procédé de fabrication du raccord de branchement en matières thermoplastiques qui vient d'être décrit, le procédé se caractérisant essentiellement en ce que le fût tubulaire est obtenu à partir d'un simple tronçon de tube en matière thermoplastique extrudée, rigide, thermoformé, éventuellement tulipé et/ou chanfreiné, en ce que les manchons de fixation et de branchement sont obtenus par moulage par injection, en ce que l'on introduit puis on colle ou on soude le manchon tubulaire de fixation par l'intérieur du fût tubulaire et en ce qu'on ajuste et on colle ou on soude enfin le manchon de branchement par l'extérieur sur le manchon tubulaire de fixation.

Selon une forme de mise en oeuvre du procédé de l'invention, on peut, en une seule opération de thermoformage doter ledit tronçon de tube d'une saillie externe latérale à paroi plane sur une partie de sa circonférence, et, sur ses extrémités, de tulipages munis de gorges pour les joints ou d'emboîtements.

D'autres caractéristiques et avantages de la présente invention ressortiront de la description suivante d'exemples de réalisation, en référence au dessin annexé dans lequel :
la figure 1 est une vue schématique en vue frontale du fût axial d'un raccord de branchement selon un premier exemple de réalisation de l'invention,
la figure 2 est une vue schématique en coupe axiale du raccord,
la figure 3 est une vue schématique en coupe selon la ligne III-III de la figure 1,
la figure 4 est une vue en coupe à plus grande échelle du détail D de la figure 2 et
la figure 5 est une vue schématique en coupe axiale d'une portion d'un raccord de branchement selon une variante.

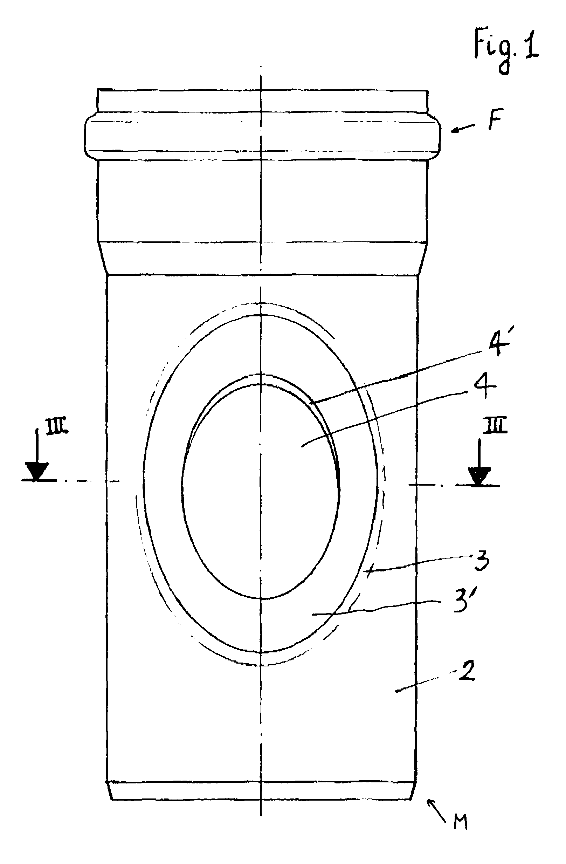

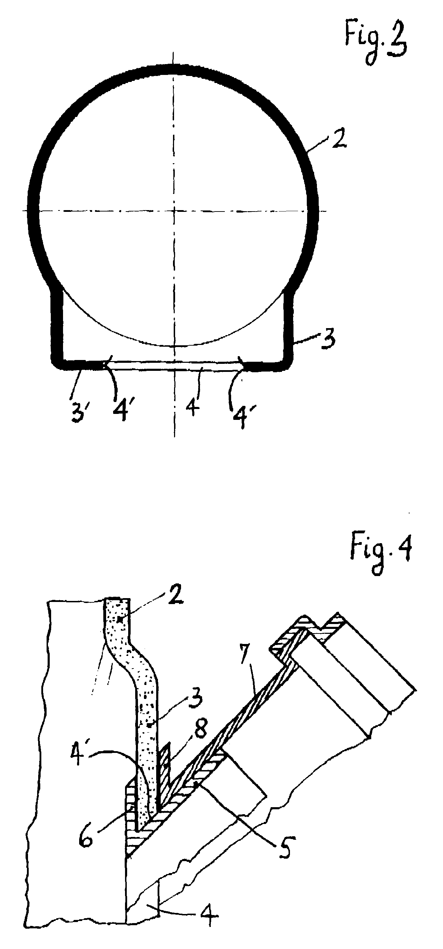

Le raccord de branchement 1 comprend un fût tubulaire 2 (figure 1 et 3) en matière synthétique thermoplastique rigide telle que du polypropylène, du polychlorure de vinyle, du polyéthylène, de l'ABS ou du PVDF dont, dans l'exemple représenté, une extrémité est munie d'une emboîture femelle F et l'autre extrémité d'une emboîture mâle M chanfreinée, ces extrémités pouvant être raccordées chacune respectivement aux tuyaux (non représentés) de la canalisation principale.

Le fût tubulaire 2 est avantageusement formé par extrusion d'un tube en matière synthétique thermoplastique rigide, coupé à longueur, thermoformé, éventuellement chanfreiné et/ou tulipé pour former les emboîtures (M, F). Le choix d'un fût extrudé est essentiellement d'ordre économique car il permet d'éviter des investissements lourds en moules d'injection de gros diamètre. La coupe est de préférence faite au moyen d'une scie circulaire de petit diamètre effectuant un mouvement planétaire autour du tube, le chanfreinage étant effectué simultanément au moyen d'une fraise.

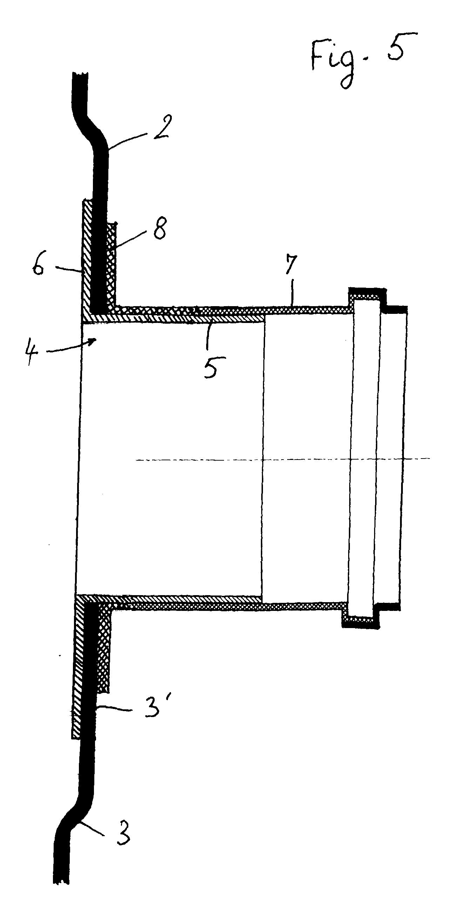

Le fût tubulaire 2 est muni d'une saillie latérale 3 formant une paroi externe plane 3' percée d'un orifice traversant 4 à bord biseauté 4', dans le cas de la figure 4, ou droit dans le cas de la figure 5. La saillie latérale 3 ainsi que les emboîtures F dotées de joints sont avantageusement thermoformées en une même opération par soufflage à chaud contre un moule.

Le fût tubulaire 2 avec sa saillie latérale 3 peut être fabriqué à l'échelle industrielle aux divers diamètres d'une gamme de raccords. L'orifice traversant 4 est découpé ensuite en fonction de la dimension et de l'angle du manchon de branchement à raccorder.

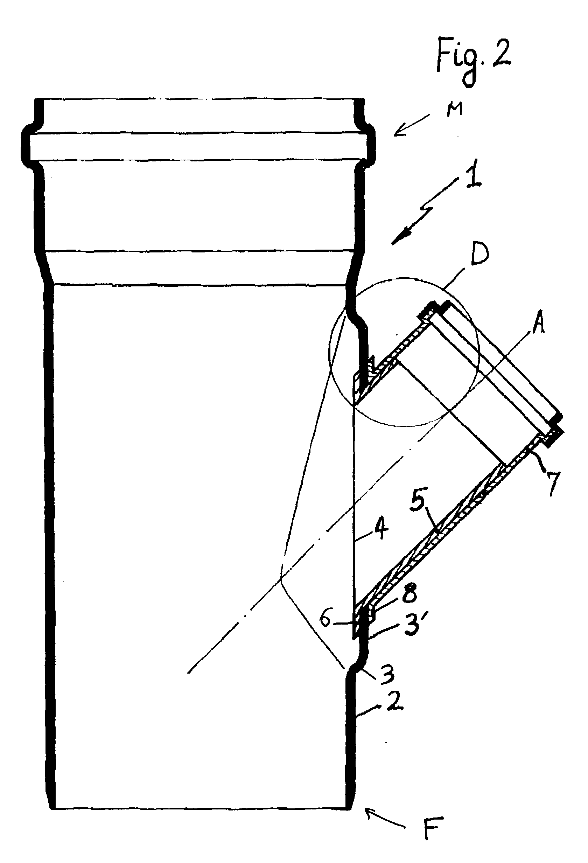

Comme représenté sur les figures 2 et 4, un manchon tubulaire de fixation 5, muni d'une collerette plane 6 d'extrémité inclinée par rapport à l'axe A du manchon tubulaire 5 d'un angle égal à celui du bord biseauté 4' de l'orifice traversant 4, est introduit, depuis l'intérieur du fût tubulaire 2, dans l'orifice traversant 4. La face de la collerette plane 6 adjacente à la face interne de la paroi plane 3' est ensuite collée ou soudée sur cette face interne.

Un manchon de branchement 7 externe, destiné à la fixation d'un tube de branchement (non représenté), est ensuite enfilé et collé ou soudé depuis l'extérieur sur le manchon tubulaire de fixation 5. Le manchon de branchement 7 est muni d'une collerette plane 8 d'extrémité, inclinée du même angle par rapport à l'axe A, dont la face externe est collée ou soudée sur la face externe de la paroi plane 3' de la saillie 3. On obtient, après collage ou soudage des différentes parties, un branchement extrêmement résistant aux sollicitations mécaniques du fait des multiples épaisseurs au droit des zones sollicitées et d'absence de raccordement des collerettes 6, 8 des deux manchons 5, 7 aux parois cylindriques du fût 2.

Le manchon tubulaire de fixation 5 et le manchon de branchement 7 sont avantageusement fabriqués par injection de matière synthétique thermoplastique rigide afin de bénéficier des tolérances dimensionnelles précises obtenues par ce mode de fabrication. Par ailleurs, le nombre de moules nécessaires pour couvrir une gamme de raccords de branchement est relativement réduit.

Dans la forme de réalisation de la figure 5, l'axe A des manchons 5 et 7 est sensiblement orthogonal à l'axe du fût 2 et le bord de l'orifice traversant 4 est en conséquence sensiblement droit.

L'invention fournit en conséquence un raccord de branchement particulièrement rigide et étanche, dont le prix de revient est très avantageux, en particulier du fait d'une fabrication facilement industrialisable.

Il ne saurait toutefois être fait novation à l'invention en utilisant un fût tubulaire obtenu par moulage par injection de matières thermoplastiques ou par tout autre procédé du type rotomoulage, extrusion-soufflage, etc. adapté auxdites matières.

## Revendications

1. Raccord (1) de branchement de canalisation, du type comprenant un fût tubulaire (2) en matière synthétique thermoplastique muni à ses deux extrémités d'emboîtures (M, F) de liaison respective aux tuyaux de la canalisation principale, ledit fût tubulaire (2) étant muni latéralement d'au moins une saillie (3) externe à paroi (3') plane percée d'un orifice traversant (4), un manchon de branchement (7) étant fixé audit fût tubulaire (2) en regard dudit orifice traversant,
caractérisé en ce que ledit manchon de branchement (7) comporte une collerette plane (8) d'extrémité, ladite collerette plane (8) d'extrémité du manchon de branchement (7) étant collée ou soudée dans l'alignement de l'orifice traversant (4), sur la face externe de la paroi plane (3') de ladite saillie (3) externe, et en ce que ledit manchon de branchement (7) est ajusté et collé ou soudé sur un manchon tubulaire de fixation (5) traversant dont l'extrémité interne est munie d'une collerette plane (6) collée ou soudée sur la face interne de la paroi plane (3') de ladite saillie (3) externe du fût tubulaire (2).

2. Raccord (1) selon la revendication 1,
caractérisé en ce que l'axe (A) du manchon de branchement (7) est oblique par rapport à l'axe du fût tubulaire (2).

3. Raccord (1) selon la revendication 2,
caractérisé en ce que le bord de l'orifice traversant (4) est biseauté (4') en concordance avec l'inclinaison du manchon de branchement (7).

4. Raccord (1) selon la revendication 1,
caractérisé en ce que l'axe (A) du manchon de branchement (7) est sensiblement orthogonal à l'axe du fût tubulaire (2).

5. Procédé de fabrication d'un raccord (1) selon l'une des revendications 1 à 4,
caractérisé en ce qu'on forme le fût tubulaire (2) à partir d'un simple tronçon de tube en matière thermoplastique extrudée thermoformé, éventuellement chanfreiné et/ou tulipé pour former les emboîtures (M, F).

6. Procédé selon la revendication 5,
caractérisé en ce qu'on dote, en une seule opération de thermoformage, ledit tronçon de tube d'une saillie externe latérale à paroi plane sur une partie de sa circonférence, et, sur ses extrémités, de tulipages munis de gorges pour les joints ou d'emboîtements.

7. Procédé selon l'une des revendications 5 et 6,
caractérisé en ce qu'on effectue la coupe du tube au moyen d'une scie circulaire de petit diamètre effectuant un mouvement planétaire autour du tube, le chanfreinage étant effectué simultanément au moyen d'une fraise.

8. Procédé selon l'une des revendications 4 à 7,
caractérisé en ce qu'on fabrique le manchon tubulaire de fixation (5) et le manchon de branchement (7) par injection d'une matière synthétique thermoplastique rigide.

9. Procédé selon l'une des revendications 4 à 8,
caractérisé en ce qu'on introduit le manchon tubulaire de fixation (5) par l'intérieur du fût tubulaire (2), on colle ou on soude sa collerette plane (6) sur la face interne de la paroi plane (3') de la saillie (3) du fût tubulaire (2) et on ajuste et colle ou soude ensuite le manchon de branchement (7) par l'extérieur sur ledit manchon tubulaire de fixation (5) en collant ou soudant simultanément la collerette plane (8) du manchon de branchement (7) sur la face externe de la paroi plane (3') de la saillie (3) du fût tubulaire (2).
